# EUROPEAN PATENT SPECIFICATION

(11) **EP 1 895 769 B1**
(45) Date of publication and mention of the grant of the patent: **20.03.2013**
(21) Application number: 06018339.9
(22) Date of filing: 01.09.2006
(51) Int. Cl.: H04N 5/445

(54) **User-related tv channel list determination**
Ermittlung einer benutzerbezogener Fernsehkanalliste
Détermination d'une liste de canaux de télévision liée à l'utilisateur

(43) Date of publication of application: 05.03.2008
(73) Proprietor: Vestel Elektronik Sanayi ve Ticaret A.S., 45030 Manisa (TR)
(72) Inventor: Bashan, Huseyin, Organize Sanayi Bölgesi 45030 Manisa (TR)
(74) Representative: Cayli, Hülya

(56) References cited:
- US-A- 5 917 481
- US-A1- 2004 078 806
- US-A1- 2005 177 846
- DATABASE WPI Week 200652 Derwent Publications Ltd., London, GB; AN 2006-509334 XP002437782 & KR 2005 120 968 A (SAMSUNG ELECTRONICS CO LTD) 26 December 2005 (2005-12-26)

## Description

The present invention relates to domestic audio/visual (A/V) systems, and more particularly to a TV receiver, and related method, for providing user-related TV channel list determination.

The invention has applications in AN systems in which multiple audio or video channels are available (for example a channel is displayed, or the names of channels are displayed as a list, e.g. in an interactive TV program guide), and there is a desire, for certain users, to restrict access to the channel and/or to prevent the channel from being (displayed and/or) selected.

In conventional TV systems (e.g. US 6732367), it is known to provide an interactive television program guide which is implemented on the user's TV equipment. In such systems, potentially objectionable material such as the titles and descriptions of adult programs may be blocked, for example by replacing an adult program listing with unobjectionable black region, a generic unobjectionable program listing, or an unobjectionable title based on a channel being blocked. The user may invoke blocking of titles, descriptions, or both titles and descriptions. Blocking may be based on the rating of a program in the program listings. Access may be provided to blocked program listings by entering a parental control code. The user may temporarily disable adult program listing blocking. The user may also set parental control locks for any type of potentially unobjectionable programming and may temporarily disable such locks.

The operator of a television distribution facility may be provided with an opportunity to block the display of potentially unobjectionable material with interactive television program guide. If desired, blocking may be invoked for all users of the program guide.

The system also allows the user to set parental control locks for any type of potentially objectionable programming. The program guide allows the user to temporarily disable parental control locks when a user wishes to view locked television programming. When temporary disablement is finished, the locks that were originally set may be restored.

Programs that contain potentially objectionable material may be identified at the television distribution (broadcast) facilities or may be identified at the main facility prior to distribution of the program listing to the television distribution facilities. Identification of potentially objectionable material may be based on ratings, keywords, channel information, or other suitable criteria. For example, the program listings for all X-rated programs may be identified as being potentially objectionable.

In another system, known from WO 03/092272, the program guide may provide the user with various opportunities to invoke blocking. For example, the user may be provided with options in a set-up menu for turning blocking off or on. If desired, the user may be provided with options that allow the user to control the level of blocking (e.g. based on ratings or other suitable criteria). The user may block titles, program descriptions, or let software do the blocking automatically.

One known system (see from US20020073421A1) is a type of system that automatically edits personal television programs based on viewer's information which are privately stored in viewers computerized television receivers. The system filters everything that is unacceptable or useless for defined profile, notably children. For those systems, the system asks the user his/her predefined age or authority over channel choice, if the user is mature enough to view the content of that channel, system releases the audio and video information, if initial user is not permitted to view such content, a warning message is processed and the video and audio information from that channel source is blocked. The filtering is carried out in various ways such like; blocking television program, blocking some parts of the program or replacing some parts by alternative fragments.

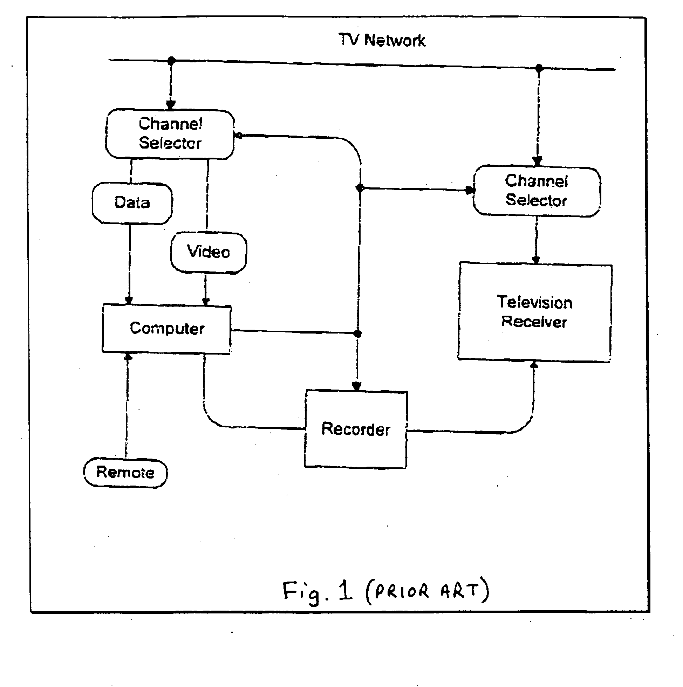

The system disclosed in US20020073421A1 is the profile-recognition based personal television system, the flow diagram for which is shown Fig.1 (PRIOR ART). In those systems, profiles can be created, and non-volatile memories for user information storage can be used. By means of that profile creation, whenever user encounters an undesired scene, it is blocked or replaced with another frame. This method is also used for parental control, in parental control process: if the user's age is not within the minimum range for a particular program, it is blocked or replaced with a more suitable frame.

Another prior art approach to dealing with unsuitable/objectionable programs/channels is to represent adult-content channels as "blanks" or "dots" in channel selection menus (see Fig. 2 (PRIOR ART), and US20050166235A1). If an individual wants to watch the content of those programs, he/she has to enter a predefined adult password.

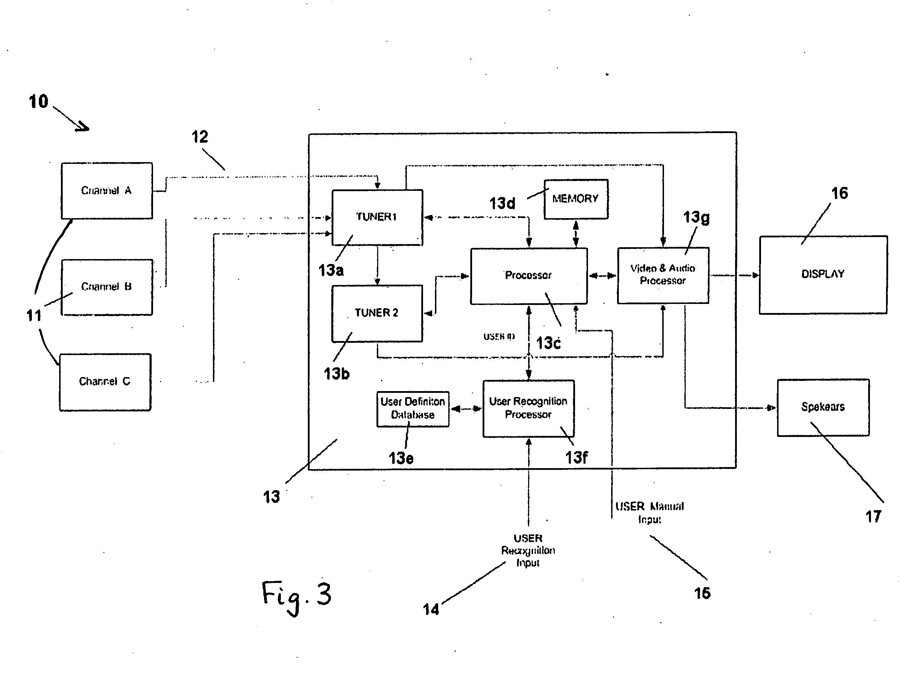

KR20050120968 (A) discloses a digital broadcasting receiver for providing program guide information in real-time. The system employs a first tuner for tuning to a specific broadcasting channel, and a second tuner for tuning a plurality of broadcasting channels sequentially with a constant time interval. The system detects genre information (i.e. what type of programming, sport, football, news, movie) of the broadcast program currently being viewed (via the first tuner). Broadcast program information included in a plurality of broadcast channels selected by the second tuner are separated and stored in the plurality of storage units, one for each genre. For each channel, a detecting unit 150 detects genre information (e.g. news, movies, sports, documentaries, dramas, etc.), which part of the broadcast program information for each channel. The main storing unit stores the preference priority of genres that has been set by the user, e.g. news -> drama -> sport -> movie. If a user input by pressing mode key 185a is received )i.e."favourite" key, a controlling unit has first tuner tune to the first program (channel) in the list of stored programs from the 1st priority genre, and controls the screen generating unit 175 to generate a favorite program guide information screen (Fig. 3) based on the preference priority per the set program genre, the favorite program guide information screen then being displayed, showing program (channel) information is displayed in sequence of preference of program genre as set by the user.

US2004/0078806 discloses a system and method for *displaying a summary menu* of stored user profiles, in parental control television systems in involving editing, creating, and displaying user profiles associated therewith, i.e. in a *graphical user interface*. The method for controlling viewing of television programs comprises storing user profile records comprising fields having values in a memory; providing a user interface having a list of the stored user profile records; and upon user command, displaying a stored user profile record in summary form in the user interface. Preferably, the user command comprises highlighting a stored user profile record in the list, resulting in the values of the highlighted stored user profile record being displayed in summary form in the user interface. The list of users is displayed on the left of the screen, and when one is selected, the corresponding user profile (settings, e.g. TV rating limits, whether unrated content can be viewed) for that user is displayed on the right.

US20050177846 discloses a *contents extraction* method, contents extraction apparatus, contents information display method and apparatus, which extract specific contents from a plurality of contents and a method and apparatus which display information related to extracted contents. This is effectively a form of electronic program guide (EPG) -- a typical function using the metadata which is received in advance. The electronic program guide is a function that displays channels, broadcasting time, and program titles serving as the metadata on a screen. The metadata may include categories (genres) of programs. The system is to support extraction of contents suitable for the age and taste of a user without causing the user to consciously change the setting and taste of the user. This is done by updating a set age of a user on the basis of information related to a reference time.

A disadvantage of known systems is that, for a junior user, interfacing "blanks" in channel selection menu, or watching mature contented programs in black screen mode is not only time-consuming but also unsatisfactory to the user.

In relation to profiled based systems, a disadvantage is that there are no dynamic searches for a profile of a user, the program enabling decision is generally given at the moment of program selection, and a general channel list is created with delay.

The present invention addresses the problem of limited parental control options and inaccuracy of profile-based channel list systems.

This invention seeks to overcome the aforementioned problems and provide an improved method and system for user-related TV channel list determination.

The present invention provides a TV receiver according to claim 1 of the appended claims.

Preferably, said memory includes a non-volatile memory having stored therein, for each of one or more predetermined users, associated with the user ID, the corresponding user attribute data, and (b) comprises using the user ID to access the user attribute data for the user from the non-volatile memory.

Preferably, (c) comprises: (c1) scanning over a frequency range, (c2) at a predetermined point in the frequency range, for each of said predetermined users, starting with an empty current user channel list, adding to the current user channel list each channel located for which the programme attribute data and the user attribute data meet predetermined criteria, and (c3) when said predetermined point is subsequently reached, storing, for each user, the respective current user channel list in memory.

In one embodiment, (c) comprises continuously repeating (c1) to (c3).

In another embodiment, (c) comprises, after (c1) to (c3): (c4) scanning over one or more parts but not all of the frequency range, wherein the or each part contains one or more channels (i) found in a prior scan of all or part of the frequency range or (ii) corresponding to a user selection; (c5) for each of said predetermined users, starting with an empty current user channel list, adding to the current user channel list each channel located for which the programme attribute data and the user attribute data meet predetermined criteria, and (c6) storing, for each user, the respective current user channel list in memory.

The programme attribute data may include an age range, the user attribute data includes the date of birth of the user, and said predetermined criteria include that the age of the user, derived from the date of birth is within said age range. Preferably, the processing circuitry is operable for deriving the age of the user is by subtracting the date of birth of the user from the current date; the current date being obtained from Teletext data within the TV signal or from an internal system clock of the TV receiver.

Alternatively or additionally, the programme attribute data may include a content attribute, the content attribute indicating that the currently transmitted programme for restricted access, the user attribute data including an accessibility attribute of the user, and said predetermined criteria including that the accessibility attribute of the user indicates that the user is authorised to view restricted access programmes.

The TV receiver may further including a display device, wherein the processor is further operable for (e) displaying the list of current user channels.

In one embodiment, the TV receiver is embodied in a set-top box, wherein the processor is further operable for (e') outputting AN signals defining the list of current user channels to an A/V output.

According to another aspect of the invention there is provided a method according to claim 11 of the appended claims.

Preferably, said memory includes a non-volatile memory having stored therein, for each of one or more predetermined users, associated with the user ID, the corresponding user attribute data, and (b) comprises using the user ID to access the user attribute data for the user from the non-volatile memory.

Preferably, (c) comprises: (c1) scanning over a frequency range, (c2) at a predetermined point in the frequency range, for each of said predetermined users, starting with an empty current user channel list, adding to the current user channel list each channel located for which the programme attribute data and the user attribute data meet predetermined criteria, and (c3) when said predetermined point is subsequently reached, storing, for each user, the respective current user channel list in memory.

In one embodiment, (c) comprises continuously repeating (c1) to (c3).

In another embodiment, (c) comprises, after (c1) to (c3): (c4) scanning over one or more parts but not all of the frequency range, wherein the or each part contains one or more channels (i) found in a prior scan of all or part of the frequency range or (ii) corresponding to a user selection; (c5) for each of said predetermined users, starting with an empty current user channel list, adding to the current user channel list each channel located for which the programme attribute data and the user attribute data meet predetermined criteria, and (c6) storing, for each user, the respective current user channel list in memory.

The programme attribute data may include an age range, the user attribute data includes the date of birth of the user, and said predetermined criteria include that the age of the user, derived from the date of birth, is within said age range. The method preferably comprises operating the processing circuitry for deriving the age of the user by subtracting the date of birth of the user from the current date; the current date being obtained from Teletext data within the TV signal or from an internal system clock of the TV receiver.

Alternatively or additionally, the programme attribute data may include a content attribute, the content attribute indicating that the currently transmitted programme for restricted access, the user attribute data including an accessibility attribute of the user, and said predetermined criteria including that the accessibility attribute of the user indicates that the user is authorised to view restricted access programmes.

Preferably, the TV receiver comprises a display device, wherein the method includes operating the processor for (e) displaying the list of current user channels.

The TV receiver may be embodied in a set-top box, wherein the method includes operating the processor for (e') outputting A/V signals defining the list of current user channels to an AN output.

According to another aspect of the invention there is provided a programmable TV receiver when suitably programmed for carrying out at least the steps of any of claims 11 to 20.

According to another aspect of the invention there is provided a recordable, rewritable or storable medium having recorded or stored thereon data defining or transformable into instructions for execution by processing circuitry and corresponding to at least the steps of any of claims 11 to 20.

According to another aspect of the invention there is provided a server computer incorporating a communications device and a memory device and being adapted for transmission on demand or otherwise of data defining or transformable into instructions for execution by processing circuitry and corresponding to at least the steps of any of claims 11 to 20.

The present invention has advantages over known techniques, the main ones being as follows.

The invention is results in enhancement parental control options and improves on profile-based channel list systems: parents can establish parental control in an easier manner.

Another advantage is that the (TV) system is always searching age and rating information from incoming signals, and all available channels for a predefined user as of the current date are viewable on the channel list. By means of the dual tuner system, one of the tuners responds to user inputs, while the other one constantly searches for age limitation information. Age changes are always be updated, e.g. from teletext or internal clock data.

The users' ages are entered to system and are compared with an initial date, so that they may be able to view adult contents in future. Every user will be defined to system, and every user will be able to watch channels corresponding to their age. The current user channel list is always refreshed. Every user is able to see every channel listed that he/she has access to watch.

Also, in certain embodiments after performing an automatic search, the system locks on previously found frequencies to be used for the next search, thereby being more time efficient.

More particularly, the invention and its embodiments enable creating profiles for different users, and disabling (display/listing of) unsuitable/objectionable programs for junior and mature users, and concurrently creating dynamic channel lists for every defined profile. A dual tuner system is employed in the TV receiver system, one of which responds to user remote control inputs, and the other constantly searches for age and rating information from incoming signals; the gathered information being compared with predefined profiles and channel lists then created according to age and/or birthday and selection inputs. Consequently, individual users are offered to view all available channels at any instant according to their ages and preferences. And users' current ages are determined the current date obtained from teletex or an internal clocked date system, in order to update profile info.

Embodiments of the invention will now be described in detail, by way of example, with reference to the accompanying drawings, in which:
Figure 1 (PRIOR ART) is a flow diagram illustrating a known profile-recognition based personal television system;

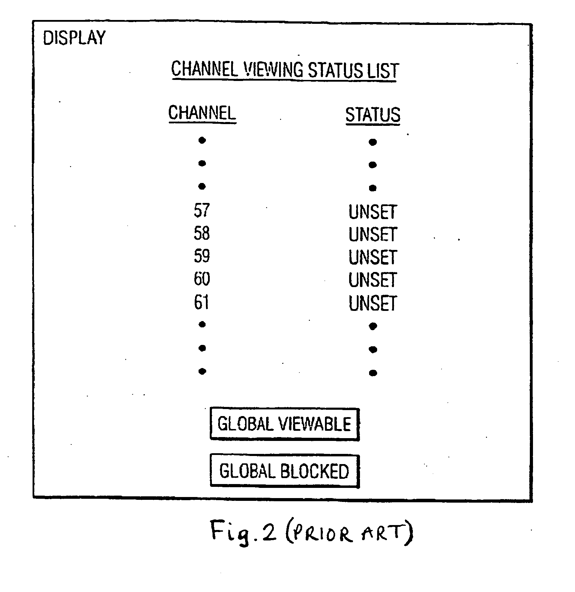

Figure 2 (PRIOR ART) shows a parentally controlled channel list sample for the system of Fig. 1;
Figure 3 shows a block diagram of the TV receiver system according to one embodiment of the invention;
Figure 4 shows flowchart the process, according to one embodiment of the invention and implemented in the system of Fig.3, that dynamically creates channel lists for users according to their pre-defined profiles;
Figure 5 shows an example of an individual user channel list generated by the process of Fig. 4; and
Figure 6 shows a flowchart for modified channel search according to another embodiment of the invention, after performing an automatic search.

In the description and drawings, like numerals are used to designate like elements. Unless indicated otherwise, any individual design features and components may be used in combination with any other design features and components disclosed herein.

Figure 3 shows a block diagram of the TV receiver system 10 according to one embodiment of the invention. The system comprises a receiver unit 13, comprising various circuitry components, schematically illustrated by blocks. As embodied in a (TV receiver) set-top box (e.g. DVB-T, DVB-S), the invention comprises the receiver unit 13, and when embodied in a TV system, the invention further comprises display 16 and speakers 17. However, it will also be appreciated that the invention may be embodied in a VCR, DVD system, TV tuner card for personal computer, as well as other A/V systems.

The receiver unit comprises a first tuner 13a and a second tuner 13b, that receive (directly or indirectly) the TV signal input from an antenna, satellite, cable or other source, and output decoded digital signals. The receiver unit also comprises a main processor 13c that as coupled to (non-volatile) memory 13d, as well as to the first 13a and second 13b tuners. A futher processor - user recognition processor 13f -- is also provided, couple to the main processor 13c and having access to a user definition database 13e in a further memory.

Finally, a Video & Audio processor 13g is provided, coupled to the main processor 13c and to the first 13a and second 13b tuners; and this Video & Audio processor 13g drives the display 16 and speakers 17.

As schematically illustrated, the TV signal received by the tuners 13a, 13b may convey one of multiple channels (here, exemplified by Channel A, Channel B and Channel C) that may be selectively tuned to by the tuners, and the corresponding digital signals for the channel output by the tuners for display or channel-related processing.

The first tuner 13a is used for conveying a tuned channel signal to video & audio processor 13g. In one embodiment, the second tuner 13b dynamically searches channels to recognize content of current program's age range information. Age range information can be transmitted to the second tuner 13b in the "vertical blanking interval" (VBI) or in an "Electronic program guide" (EPG) or as a "visual hologram". It will be appreciated that the first 13a and second 13b tuners may be manufactured in the same electrical package. As discussed hereinafter, the purpose of the second tuner 13b is to enable tuning two channels at the same time.

The main processor 13c is used for processing users' definition data and checking user IDs. Also, the main processor 13c sends signals to the video & audio processor 13g, and those signals contain information which enable or disable the video and audio content of user display and audio.

The video & audio Processor 13g is responsible for video & audio signal processing, including demodulation and separation of audio and video, and similar processing. The first tuner 13a supplies Video & Audio content signals to the video & audio Processor 13g.

The memory 13d is for saving and accessing (re-using) frequency information for the channels, current user ID, age range information of the current program on the selected channel, and current age information for all channels. Also, memory 13d is used for saving user IDs, users' names, their age (date of birth) information and dates of entered age information.

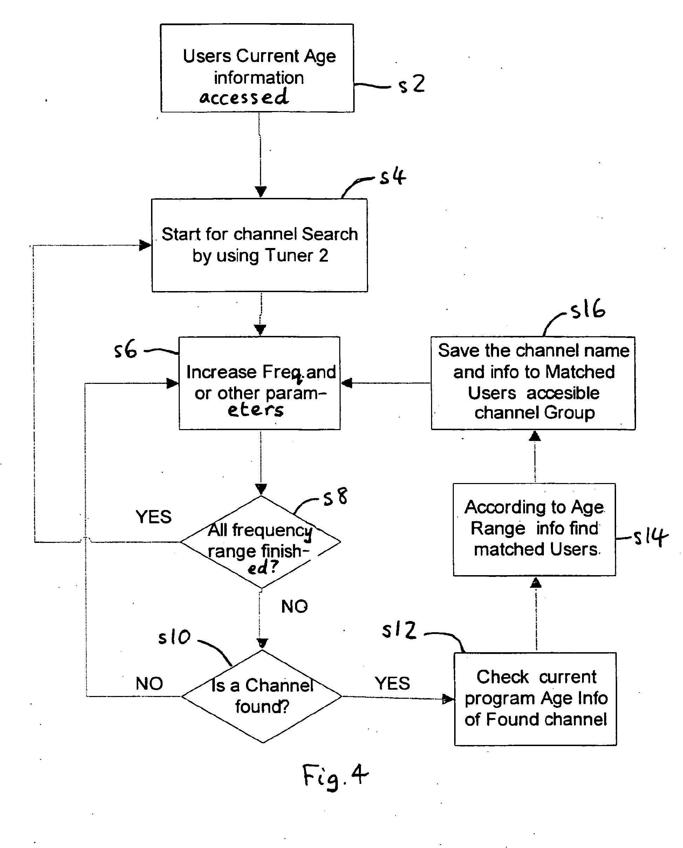

Figure 4 shows flowchart the process, according to one embodiment of the invention and implemented in the system of Fig.3, that dynamically creates channel lists for users according to their pre-defined profiles.

According to embodiments of the invention, various profiles for various users are defined, to prevent unauthorized users to watch unsuitable or objectionable programs. For that purpose, the dual-tuner system is implemented in the TV receiver system of Fig. 3, one of which responds to user inputs while the other dynamically searches for age range information of programs and creates appropriate channel lists for each defined user.

According to embodiments of the invention, the initial user is assigned as administrator and he/she defines the other users; the administor enters the system their personal information (e.g user birthday, name). Whenever the system is operated, the system invites the user(s) to enter their user ID via external devices such as a remote control or keypad; by means of that, system creates recognition information and checks for a predefined user and creates a matched user ID. The processor reads identified user's age (or date of birth) information from memory; and age information is continuously updated according to current date, the current date being followed through a TV text system (e.g. Teletext) or through an internal clock date.

Figure 4 illustrates the operation of the system. In the first step s2, current ages of the defined users are extracted from stored non-volatile memory and loaded to a volatile memory.

The system starts (s4) searching channels for by using the second tuner 13b (Fig. 3); the system increases frequency and other alternative parameters at s6 and checks (s8) if all the frequency range has been scanned, and if so, processing returns to s4.

If all the frequency range has not been scanned, a check is made (s10) to see if a channel is founded or not. If there exists no channel for the searched frequency, the system continues to increase frequency (returns to s6).

If the system finds a channel at s10, it checks (s12) age range information of that particular channel and according to age range info, the system finds matched users (s14) and saves the channel's name and info to matched users' accessible (current) channel lists (s16).

The system continues increasing frequency (s6) and other parameters. The system checks if scanning all of the frequency range is finished or not (s8). If the frequency range is finished, the system re-starts channel searching (s4). And according to the initial user identified to the system (e.g. the current user watching the TV), the user interface operates to generate/display a current channel list, which is specifically prepared for that user's profile (e.g. depending on their age).

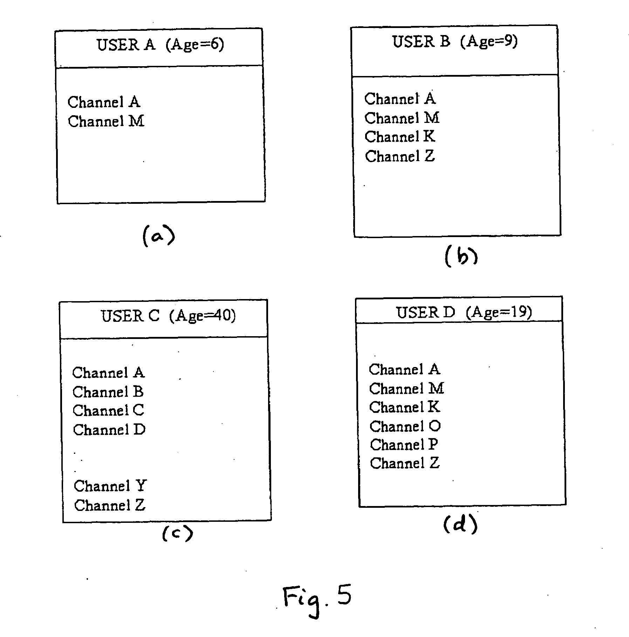

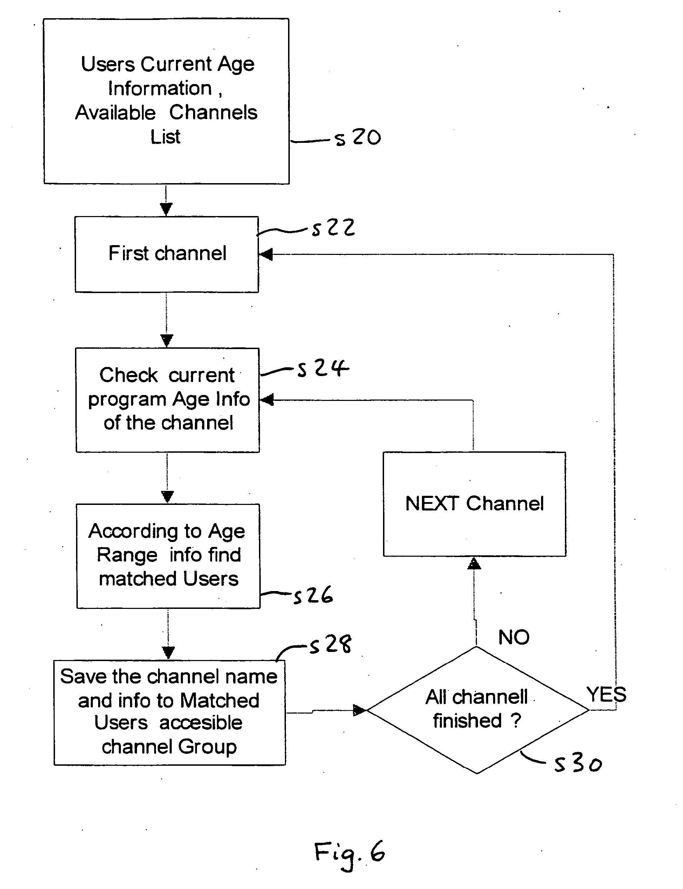

Figure 5 shows an example of an individual user channel list generated by the process of Fig. 4. It will be seen that as an effect of the system is that the generated/displayed current channel list is different depending on the user's age, i.e. more channels are available to a 9-year-old (Fig. 5(b)) than to a 6-year-old (Fig. 6(a)), and more channels are available to a 19-year-old (Fig. 5(d)) than to a 9-year-old (Fig. 5(b)). In other words,the senior users have access to the junior users' channel lists, and the admininistrator/mature user have access to all channels.

While a user watches a suitable program on a selected channel (which is classified according to his/her age limit), the content of the program on the particular channel may change due to end of the current program. The next program on the same channel may be unsuitable or objectionable. According to embodiments of the invention, at that instant, the individual channels list menu appears on the screen and invites the user to select another suitable program from the channel list. This kind of situation may occur when arbitrary unrelated programs are screened in succession (e.g. screening a horror movie after a cartoon movie), and the displayed/blocking menu does not disappear unless the user selects a suitable channel.

Another possibility is that, if the user enters a channel number through remote control, and if the content of the channel is not suitable, the same menu also appears and does not disappear until another choice is selected. With the help of this system, the created current channel list is stored and user is able to view the same channel (if suitable) whenever he/she presses the same number on remote control.

Figure 6 shows a flowchart for modified channel search according to another embodiment of the invention, after performing an automatic search.

The alternative system uses the benefits of automatic search or channel preferences. In the previously described embodiment, the channel frequency is swept over its entire bandwidth, whereas in the alternative system, after performing a full automatic search or after creating channel lists, the system locks on only specific frequencies, which were previously found by automatic search or entered by user; by means of this a fa ster search may be done.

The alternative embodiment is that shown in Fig.6: this indicates alternative creation/adjustment of individual channel lists according to current programs of all channels and users. The system dynamically decodes age range information of the channels whose frequencies and other info are available on the system. Channel info can be found and recorded/stored by using Automatic Program Search or Manual Search. Automatic Program Search is used for searching all channels on all frequencies within the range, obtaining other parameters and recording this info to the system.

As before, a second tuner (See Fig. 3) is used. The main processor 13c periodically sends required frequency information, which belong to recorded/stored channels, to the second tuner 13b, for collecting age range information for the recorded/stored channels. In Fig. 6, the first (s20) and second (s22) steps involve receiving data for processing. In the first step s20, user recognition is performed in which the user's current age information and the available channels list are obtained.

The second step s22 indicates first channel information that is the starting point for new checking/scanning. Third step s24 comprises obtaining and decoding the given channel's current age range information (initially, for the first channel). According to the age range information, the system finds (s26) matched users whose ages are among the age range, in defined users.

In the next step s28, the system saves channel's names and info to matched users accessible (current) channel lists. The system checks (s30) if all channels are finished or not, and if it is not, the system jumps (s32) to the next channel and steps 24 to s30 are repeated. The loop continues until all channels are finished. When all channel processing are finished, the system jumps once again to the first channel. The system repeats the process continuously; thus, dynamically the system check and process age range information based on more current data.

## Claims

1. A TV receiver (13), comprising:
a first tuner (13a), for receiving a TV signal, decoding the signal and outputting audio and/or video signals;
a second tuner (13b), for receiving a TV signal, decoding the signal and outputting realtime programme attribute data;
processing circuitry (13c, 13f, 13g), memory (13d) and Ul circuitry (13e, 13f), the processing circuitry (13c, 13f, 13g) being coupled to at least the second tuner (13b), the memory (13d) and the Ul circuitry (13e, 13f);
wherein the processing circuitry (13c, 13f, 13g) is operable for
(a) receiving a user input from a user via the Ul circuitry (13e, 13f);
(b) obtaining (s2) data in response to the user input;
(c) generating (s4-s16) a current user channel list (Fig. 5(a)-(d)), including using the second tuner (13b) to scan (s4-s10) for successive TV channels and, for each channel located, obtaining (s12) the respective programme attribute data;
**characterised in that** the data obtained in (b) comprises user attribute data; **in that**
the TV receiver (13) is adapted to be used by each of a plurality of users, said memory (13d) having stored therein, for each of one or more predetermined users, associated with a user ID, the corresponding user attribute data; **in that**
the user input comprises a user ID of one of said predetermined users; **in that** (c) is performed (s4-s16) dynamically following receipt of the user input; and **in that** (c) comprises (c1)
canning (s4-s8) over a frequency range (c2) starting at a predetermined point for each of said predetermined users, starting (s4) with an empty user channel list,
if a channel is found, for which program attribute data and user attribute data for said user channel list meet a predetermined criteria, adding said found channel to said user channel list
(C3) storing, for each user, the respective user channel list as the current user channel list in the memory
continuously repeating (c1) to (c3)
wherein said memory (13d) includes a non-volatile memory, and (b) comprises using the user ID to access the user attribute data for the user from the non-volatile memory
wherein said programme attribute data includes an age range, the user attribute data includes the date of birth of the user, and said predetermined criteria include that the age of the user, derived from the date of birth is within said age range.

2. The TV receiver of claim 1, wherein (c) comprises,
scanning (s22-s30) over one or more parts but not all of the frequency range, wherein the or each part contains one or more channels (i) found in a prior scan of all or part of the frequency range or (ii) corresponding to a user selection;

3. The TV receiver of ciaim 2, wherein the processing circuitry (13c, 13f, 13g) is operable for deriving the age of the user is by subtracting the date of birth of the user from the current date; the current date being obtained from Teletext data within the TV signal or from an internal system clock of the TV receiver (13).

4. The TV receiver of any of the preceding claims, wherein:
said programme attribute data includes a content attribute, the content attribute indicating that the currently transmitted programme is for restricted access,
the user attribute data includes an accessibility attribute of the user, and said predetermined criteria include that the accessibility attribute of the user indicates that the user is authorised to view restricted access programmes.

5. The TV receiver of any of the preceding claims, further including a display device (16), wherein the processing circuitry (13c, 13f, 13g) is further operable for (e) displaying the list (Fig. 5(a)-(d)) of current user channels.

6. The TV receiver of any of claims 1 to 4, embodied in a set-top box, wherein the processing _ circuitry (13c, 13f, 13g) is further operable for (e') outputting A/V signals defining the list of current user channels to an A/V output.

7. A method carried out in a TV receiver (13), the TV receiver comprising a first tuner (13a), for receiving a TV signal, decoding the signal and outputting audio and/or video signals, a second tuner (13b), for receiving a TV signal, decoding the signal and outputting realtime programme attribute data, processing circuitry (13c, 13f, 13g), memory (13d) and Ul circuitry (13e, 13f), the processing circuitry (13c, 13f, 13g) being coupled to at least the second tuner (13b), the memory (13d) and the Ul circuitry (13e, 13f);
wherein the method comprises operating the processing circuitry (13c, 13f, 13g) for
(a) receiving a user input from a user via the Ul circuitry (13e, 13f);
(b) obtaining (s2) data in response to the user input;
(c) generating (s4-s16) a current user channel list (Fig. 5(a)-(d)), including using the second tuner (13b) to scan (s4-s10) for successive TV channels and, for each channel located, obtaining (s12) the respective programme attribute data, whereby the current user channel list includes only those channels for which the programme attribute data and the user attribute data meet predetermined criteria
**characterised in that** the data obtained in (b) comprises user attribute data; **in that** the TV receiver (13) is adapted to be used by each of a plurality of users, said memory (13d) having stored therein, for each of one or more predetermined users, associated with a user ID, the corresponding user attribute data; **in that**
the user input comprises a user ID of one of said predetermined users; **in that** (c) is performed (s4-s16) dynamically following receipt of the user input; and **in that** (c) comprises c1
scanning (s4-s8) over a frequency range (c2) starting at a predetermined point,
for each of said predetermined users, starting (s4) with an empty user channel list,
if a channel is found, for which program attribute data and user attribute data for said user channel list meet a predetermined criteria, adding said found channel to said user channel list
(C3) storing, for each user, the respective user channel list as the current user channel list in the memory
continuously repeating (c1) to (c3)
wherein said memory (13d) includes a non-volatile memory, and (b) comprises using the user ID to access the user attribute data for the user from the non-volatile memory
wherein said programme attribute data includes an age range, the user attribute data includes the date of birth of the user, and said predetermined criteria include that the age of the user, derived from the date of birth, is within said age range.

8. The method of claim 7, wherein (c) comprises
scanning (s22-s30) over one or more parts but not all of the frequency range, wherein the or each part contains one or more channels (i) found in a prior scan of all or part of the frequency range or (ii) corresponding to a user selection;

9. The method of claim 8, comprises operating the processing circuitry (13c, 13f, 13g) for deriving the age of the user by subtracting the date of birth of the user from the current date; the current date being obtained from Teletext data within the TV signal or from an internal system clock of the TV receiver.

10. The method of any of claims 7 to 9, wherein:
said programme attribute data includes a content attribute, the content attribute indicating that the currently transmitted programmes for restricted access,
the user attribute data includes an accessibility attribute of the user, and said predetermined criteria include that the accessibility attribute of the user indicates that the user is authorised to view restricted access programmes.

11. The method of any of claims 7 to 10, further including a display device (16), wherein the processing circuitry (13c, 13f, 13g) is further operable for (e) displaying the list of current user channels.

12. The method of any of claims 7 to 10, embodied in a set-top box, wherein the processing circuitry (13c, 13f, 13g) is further operable for (e') outputting A/V signals defining the list of current user channels to an A/V output.

13. A programmable TV receiver (13) when suitably programmed for carrying out at least the steps of any of claims 7 to 10.

14. A recordable, rewritable or storable medium having recorded or stored thereon data defining or transformable into instructions for execution by processing circuitry and corresponding to at least the steps of any of claims 7 to 10.

15. A server computer incorporating a communications device and a memory device and being adapted for transmission on demand or otherwise of data defining or transformable into instructions for execution by processing circuitry and corresponding to at least the steps of any of claims 7 to 10.

## Patentansprüche

1. Ein TV-Empfänger (13), aufweisend:
einen ersten Tuner (13a), um ein TV-Signal zu empfangen, das Signal zu entschlüsseln und Audio- und/oder Video-Signale auszugeben;
einen zweiten Tuner (13b), um ein TV-Signal zu empfangen, das Signal zu entschlüsseln und Echtzeit-Programmmerkmalsdaten auszugeben;
eine Verarbeitungsschaltkreisanordnung (13c, 13f, 13g), einen Speicher (13d) und eine Benutzeroberflächenschaltkreisanordnung (13e, 13f), wobei die
Verarbeitungsschaltkreisanordnung (13c, 13f, 13g) mindestens gekoppelt ist an den zweiten Tuner (13b), den Speicher (13d) und die
Benutzeroberflächenschaltkreisanordnung (13e, 13f);
wobei die Verarbeitungsschaltkreisanordnung (13c, 13f, 13g) betreibbar ist, um
(a) eine Benutzereingabe eines Benutzers über die Benutzeroberflächenschaltkreisanordnung (13e, 13f) zu empfangen;
(b) Daten (s2) in Erwiderung der Benutzereingabe zu erhalten ;
(c) eine aktuelle Benutzerkanalliste (Fig. 5(a)-(d)) zu generieren (s4-s16),
beinhaltend den Einsatz des zweiten Tuners (13b), um aufeinanderfolgende TV-Kanäle abzufragen (s4-s10) und, für jeden gefundenen Kanal, die
jeweiligen Programmmerkmalsdaten abzurufen (s12);
**gekennzeichnet dadurch, dass** die in (b) erhaltenen Daten Benutzermerkmalsdaten enthalten, dass der TV-Empfänger (13) zur Verwendung durch jeden von einer Mehrzahl von Benutzern ausgelegt ist, im Speicher (13d) für jeden von einem oder
mehreren vorbestimmten Benutzern, zugeordnet mit einer Benutzer-ID, die entsprechenden Benutzermerkmalsdaten gespeichert sind, dass
die Benutzereingabe eine Benutzer-ID von einem der vorbestimmten Benutzer aufweist, dass (c) dynamisch ausgeführt wird (s4-s16) nach dem Empfang der Benutzereingabe; und dass (c) aufweist (c1)
Abtasten (s4-s8) eines Frequenzbereichs (c2) beginnend an einem vorbestimmten Punkt für jeden der vorbestimmten Benutzer, beginnend (s4) mit einer leeren Benutzerkanalliste und falls ein Kanal gefunden wird, für welchen
Programmmerkmalsdaten und Benutzermerkmalsdaten für die Benutzerkanalliste festgelegte Kriterien erfüllen, Hinzufügen des gefundenen Kanals zur Benutzerkanalliste
(C3) Abspeichern der jeweiligen Benutzerkanalliste für jeden Benutzer im Speicher als aktuelle Benutzerkanalliste,
kontinuierlich (c1) bis (c3) wiederholen
wobei der Speicher (13d) einen nicht-flüchtigen Speicher umfasst und (b) die Verwendung der Benutzer-ID aufweist, um auf die Benutzermerkmalsdaten für den Benutzer aus dem nicht-flüchtigen Speicher zuzugreifen,
wobei die Programmmerkmalsdaten einen Altersbereich umfassen, die Benutzermerkmalsdaten das Geburtsdatum des Benutzers umfassen und die festgelegten Kriterien umfassen dass das Benutzeralter, abgeleitet von seinem Geburtsdatum, in dem Altersbereich liegt.

2. Der TV-Empfänger nach Anspruch 1, wobei (c) aufweist,
Scannen (s22-s30) eines oder mehrerer Teile, aber nicht des ganzen Frequenzbereichs, wobei der oder jeder Teil einen oder mehrere Kanäle enthält, die (i) in einem vorherigen Abtasten des ganzen oder eines Teils des Frequenzbereichs gefunden wurden, oder (ii) die einer Benutzerauswahl entsprechen.

3. Der TV-Empfänger nach Anspruch 2, wobei die Verarbeitungsschaltkreisanordnung (13c, 13f, 13g) betreibbar ist, um das Benutzeralter abzuleiten durch Subtrahieren des Geburtsdatums des Benutzers vom aktuellen Datum; wobei das aktuelle Datum bezogen wird aus Teletextdaten innerhalb des TV-Signals oder aus einer internen Systemuhr des TV-Empfängers (13).

4. Der TV-Empfänger nach einem der vorangegangenen Ansprüche, wobei: die Programmmerkmalsdaten ein Inhaltsmerkmal enthalten und das Inhaltsmerkmal anzeigt, dass das aktuell übertragene Programm für beschränkten Zugriff ist,
die Benutzermerkmalsdaten ein Zugänglichkeitsmerkmal des Benutzers enthalten, und die vorbestimmten Kriterien enthalten, dass das Zugänglichkeitsmerkmal des Benutzers anzeigt, dass der Benutzer autorisiert ist, Programme mit beschränktem Zugriff zu sehen.

5. Der TV-Empfänger nach einem der vorangegangenen Ansprüche, weiterhin enthaltend ein Anzeigegerät (16), wobei die Verarbeitungsschaltkreisanordnung (13c, 13f, 13g) weiterhin betreibbar ist, um (e) die Liste (Fig. 5(a)-5(d)) der aktuellen Benutzerkanäle anzuzeigen.

6. Der TV-Empfänger nach einem der Ansprüche 1 bis 4, ausgeführt in einer Set-Top-Box, wobei die Verarbeitungsschaltkreisanordnung (13c, 13f, 13g) weiterhin betreibbar ist, um (e') A/V Signale, die die Liste aktueller Benutzerkanäle definieren, an einem A/V Output auszugeben.

7. Ein Verfahren, ausgeführt in einem TV-Empfänger (13), der TV-Empfänger aufweisend einen ersten Tuner (13a), um ein TV-Signal zu empfangen, das Signal zu entschlüsseln und Audio- und/oder Video-Signale auszugeben, einen zweiten Tuner (13b), um ein TV-Signal zu empfangen, das Signal zu entschlüsseln und Echtzeit-Programmmerkmalsdaten auszugeben, eine Verarbeitungsschaltkreisanordnung (13c, 13f, 13g), Speicher (13d) und eine Benutzeroberflächenschaltkreisanordnung (13e, 13f), wobei die Verarbeitungsschaltkreisanordnung (13c, 13f, 13g) mindestens gekoppelt ist an den zweiten Tuner (13b), den Speicher (13d) und die Benutzeroberflächenschaltkreisanordnung (13e, 13f);
wobei das Verfahren aufweist, die Verarbeitungsschaltkreisanordnung (13c, 13f, 13g) zu betreiben, um
(a) eine Benutzereingabe eines Benutzers über die
Benutzeroberflächenschaltkreisanordnung (13e, 13f) zu empfangen;
(b) Daten (s2) in Erwiderung der Benutzereingabe zu erhalten;
(c) eine aktuelle Benutzerkanalliste (Fig. 5(a)-(d)) zu generieren (s4-s16),
beinhaltend den Einsatz des zweiten Tuners (13b), um aufeinanderfolgende TV-Kanäle abzufragen (s4-s10) und für jeden gefundenen Kanal die jeweiligen Programmmerkmalsdaten abzurufen (s12), wobei die aktuelle
Benutzerkanalliste nur diejenigen Kanäle umfasst, für welche die Programmmerkmalsdaten und die Benutzermerkmalsdaten festgelegte
Kriterien erfüllen
**dadurch gekennzeichnet, dass** die in (b) erhaltenen Daten Benutzermerkmalsdaten aufweisen; dass der TV-Empfänger (13) zur Verwendung durch jeden von einer Mehrzahl von Benutzern ausgelegt ist, im Speicher (13d) für jeden von einem oder 30 mehreren vorbestimmten Benutzern, zugeordnet mit einer Benutzer-ID, die entsprechenden Benutzermerkmalsdaten gespeichert sind, dass
die Benutzereingabe eine Benutzer-ID von einem der vorbestimmten Benutzer aufweist, dass (c) dynamisch ausgeführt wird (s4-s16) nach dem Empfang der Benutzereingabe; und dass (c) aufweist (c1)
Abtasten (s4-s8) eines Frequenzbereichs (c2) beginnend an einem vorbestimmten Punkt für jeden der vorbestimmten Benutzer, beginnend (s4) mit einer leeren Benutzerkanalliste und falls ein Kanal gefunden wird, für welchen Programmmerkmalsdaten und Benutzermerkmalsdaten für die Benutzerkanalliste festgelegte Kriterien erfüllen, Hinzufügen des gefundenen 5 Kanals zur Benutzerkanalliste
(C3) Abspeichern der jeweiligen Benutzerkanalliste für jeden Benutzer im Speicher als aktuelle Benutzerkanalliste,
kontinuierlich (c1) bis (c3) wiederholen
wobei der Speicher (13d) einen nicht-flüchtigen Speicher umfasst und (b) die Verwendung der Benutzer-ID aufweist, um auf die Benutzermerkmalsdaten für den Benutzer aus dem nicht-flüchtigen Speicher zuzugreifen,
wobei die Programmmerkmalsdaten einen Altersbereich umfassen, die Benutzermerkmalsdaten das Geburtsdatum des Benutzers umfassen und die festgelegten Kriterien umfassen dass das Benutzeralter, abgeleitet von seinem Geburtsdatum, in dem Altersbereich liegt.

8. Das Verfahren nach Anspruch 7, wobei (c) aufweist,
Scannen (s22-s30) eines oder mehrerer Teile, aber nicht des ganzen Frequenzbereichs, wobei der oder jeder Teil einen oder mehrere Kanäle enthält, die (i) in einem vorherigen Abtasten des ganzen oder eines Teils des Frequenzbereichs gefunden wurden, oder (ii) die einer Benutzerauswahl entsprechen.

9. Das Verfahren nach Anspruch 8, aufweisend Betreiben der Verarbeitungsschaltkreisanordnung (13c, 13f, 13g), um das Benutzeralter abzuleiten durch Subtrahieren des Geburtsdatums des Benutzers vom aktuellen Datum, wobei das aktuelle Datum wird bezogen aus Teletextdaten innerhalb des TV-Signals oder aus einer internen Systemuhr des TV-Empfängers.

10. Das Verfahren nach einem der Ansprüche 7 bis 9, wobei:
die Programmmerkmalsdaten ein Inhaltsmerkmal enthalten und das Inhaltsmerkmal anzeigt, dass das aktuell übertragene Programm für beschränkten Zugriff ist,
die Benutzermerkmalsdaten ein Zugänglichkeitsmerkmal des Benutzers enthalten, und
die vorbestimmten Kriterien enthalten, dass das Zugänglichkeitsmerkmal des Benutzers anzeigt, dass der Benutzer autorisiert ist, Programme mit beschränktem Zugriff zu sehen.

11. Das Verfahren nach einem der Ansprüche 7 bis 10, weiterhin enthaltend ein Anzeigegerät (16), wobei die Verarbeitungsschaltkreisanordnung (13c, 13f, 13g) weiterhin betreibbar ist, um (e) die Liste der aktuellen Benutzerkanäle anzuzeigen.

12. Das Verfahren nach einem der Ansprüche 7 bis 10, ausgeführt in einer Set-Top-Box, wobei die Verarbeitungsschaltkreisanordnung (13c, 13f, 13g) weiterhin betreibbar ist, um (e') A/V Signale, die die Liste aktueller Benutzerkanäle definieren, an einen A/V Output auszugeben.

13. Ein programmierbarer TV-Empfänger (13), der, wenn entsprechend programmiert, mindestens die Schritte aus einem der Ansprüche 7 bis 10 ausführt.

14. Ein beschreibbares, überschreibbares oder speicherbares Medium, welches darauf Daten aufgezeichnet oder gespeichert hat, welche definieren oder umwandelbar sind in Ausführungsanweisungen zur Ausführung durch Verarbeitungsschaltkreisanordnungen und mindestens den Schritte aus einem der Ansprüche 7 bis 10 entsprechen.

15. Ein Server-Computer, der eine Kommunikationsvorrichtung und eine Speichervorrichtung einbezieht, und angepasst ist für Übertragung auf Anfrage oder von Daten, welche definieren oder umwandelbar sind in Ausführungsanweisungen zur Ausführung durch Verarbeitungsschaltkreisanordnungen und mindestens den Schritte aus einem der Ansprüche 7 bis 10 entsprechen.

## Revendications

1. Récepteur de télévision (13) comprenant :
un premier tuner (13a) destiné à recevoir un signal de télévision, décoder le signal et sortir des signaux audio et/ou vidéo ;
un second tuner (13b) destiné à recevoir un signal de télévision, décoder le signal et sortir des données d'attribut de programme en temps réel ;
un circuit de traitement (13c, 13f, 13g), une mémoire (13d) et un circuit UI (13e, 13f), le circuit de traitement (13c, 13f, 13g) étant couplé au moins au second tuner (13b), à la mémoire (13d) et au circuit UI (13e, 13f) ;
dans lequel le circuit de traitement (13c, 13f, 13g) peut être utilisé pour
(a) recevoir une entrée d'un utilisateur via le circuit UI (13e, 13f) ;
(b) obtenir (s2) des données en réponse à l'entrée d'utilisateur ;
(c) générer (s4-s16) une liste de canaux d'utilisateur actuel (figure 5(a)-(d)), comprenant l'utilisation du second tuner (13b) pour explorer (s4-S10) des canaux de télévision successifs et pour chaque canal localisé, l'obtention (s12) des données d'attribut de programme respectif ;
**caractérisé en ce que** les données obtenues dans (b) comprennent des données d'attribut d'utilisateur ; **en ce que**
le récepteur de télévision (13) est adapté pour être utilisé par chaque utilisateur d'une pluralité d'utilisateurs, ladite mémoire (13d) ayant enregistré dedans, pour chacun d'un ou plusieurs utilisateurs prédéterminés, associés à un ID d'utilisateur, les données d'attribut d'utilisateur correspondantes ; **en ce que**
l'entrée utilisateur comprend un ID d'utilisateur de l'un desdits utilisateurs prédéterminés ; **en ce que**
(c) est réalisée (s4-s16) dynamiquement à la suite de la réception de l'entrée d'utilisateur ; et **en ce que** (c) comprend (c1),
exploration (s4-s8) d'une gamme de fréquences (c2) à partir d'un point prédéterminé, pour chacun desdits utilisateurs prédéterminés, commencement (s4) par une liste de canaux utilisateur vide, si un canal est trouvé, pour lequel les données d'attribut de programme et les données d'attribut d'utilisateur pour ladite liste de canaux d'utilisateur satisfont à un critère prédéterminé, ajout dudit canal trouvé à ladite liste de canaux d'utilisateur
(C3) enregistrement pour chaque utilisateur de la liste de canaux d'utilisateur respectif comme liste de canaux d'utilisateur actuel dans la mémoire
répétition continue de (c1) à (c3)
dans lequel ladite mémoire (13d) comprend une mémoire non volatile et (b) comprend l'utilisation de l'ID d'utilisateur pour que l'utilisateur accède aux données d'attribut d'utilisateur depuis la mémoire non volatile
dans lequel lesdites données d'attribut de programme comprennent une plage d'âge, les données d'attribut d'utilisateur comprennent la date de naissance de l'utilisateur et ledit critère prédéterminé inclut que l'âge de l'utilisateur, déduit de la date de naissance, se situe dans ladite plage d'âge.

2. Récepteur de télévision selon la revendication 1, dans lequel (c) comprend l'exploration (s22-s30) d'une ou plusieurs parties mais pas de la gamme de fréquences entière, dans lequel la ou chaque partie contient un ou plusieurs canaux (i) trouvés lors d'une exploration antérieure de toute ou une partie de la gamme de fréquences ou (ii) correspondant à une sélection d'utilisateur.

3. Récepteur de télévision selon la revendication 2, dans lequel le circuit de traitement (13c, 13f, 13g) peut être utilisé pour déduire l'âge de l'utilisateur en soustrayant la date de naissance de l'utilisateur à la date actuelle ; la date actuelle étant obtenue à partir des données de télétexte au sein du signal de télévision ou d'une horloge du système interne du récepteur de télévision (13).

4. Récepteur de télévision selon l'une quelconque des revendications précédentes, dans lequel :
lesdites données d'attribut de programme comprennent un attribut de contenu, l'attribut de contenu indiquant que le programme actuellement transmis présente un accès restreint,
les données d'attribut d'utilisateur comprennent un attribut d'accessibilité de l'utilisateur et ledit critère prédéterminé comprend que l'attribut d'accessibilité de l'utilisateur indique que l'utilisateur est autorisé à visualiser des programmes à accès restreint.

5. Récepteur de télévision selon l'une quelconque des revendications précédentes, comprenant en outre un dispositif d'affichage (18), dans lequel le circuit de traitement (13c, 13f, 13g) peut en outre être utilisé pour (e) afficher la liste (figure 5(a)-(d)) de canaux d'utilisateur actuel.

6. Récepteur de télévision selon l'une quelconque des revendications 1 à 4, réalisé dans un boîtier décodeur, dans lequel le circuit de traitement (13c, 13f, 13g) peut en outre être utilisé pour (e') sortir des signaux A/V définissant la liste de canaux d'utilisateur actuel sur une sortie A/V

7. Procédé réalisé dans un récepteur de télévision (13), le récepteur de télévision comprenant un premier tuner (13a) destiné à recevoir un signal de télévision, décoder le signal et sortir des signaux audio et/ou vidéo, un second tuner (13b) destiné à recevoir un signal de télévision, décoder le signal et sortir des données d'attribut de programme en temps réel, un circuit de traitement (13c, 13f, 13g), une mémoire (13d) et un circuit UI (13e, 13f), le circuit de traitement (13c, 13f, 13g) étant couplé au moins au second tuner (13b), à la mémoire (13d) et au circuit UI (13e, 13f) ; dans lequel le procédé comprend l'utilisation du circuit de traitement (13c, 13f, 13g) pour
(a) recevoir une entrée d'un utilisateur via le circuit UI (13e, 13f) ;
(b) obtenir (s2) des données en réponse à l'entrée d'utilisateur ;
(c) générer (s4-s16) une liste de canaux d'utilisateur actuel (figure 5(a)-(d)), comprenant l'utilisation du second tuner (13b) pour explorer (s4-s10) des canaux de télévision successifs et pour chaque canal localisé, obtenir (s12) les données d'attribut de programme respectif, moyennant quoi la liste de canaux d'utilisateur actuel comprend seulement les canaux, pour lesquels les données d'attribut de programme et les données d'attribut d'utilisateur satisfont aux critères prédéterminés
**caractérisé en ce que** les données obtenues dans (b) comprennent des données d'attribut d'utilisateur ; **en ce que** le récepteur de télévision (13) est adapté pour être utilisé par chaque utilisateur d'une pluralité d'utilisateurs, ladite mémoire (13d) ayant enregistré dedans, pour chacun de l'un ou plusieurs utilisateurs prédéterminés, associés à un ID d'utilisateur, les données d'attribut d'utilisateur correspondantes ; **en ce que**
l'entrée d'utilisateur comprend un ID d'utilisateur de l'un desdits utilisateurs prédéterminés ; **en ce que** (c) est réalisée (s4-s16) dynamiquement à la suite de la réception de l'entrée d'utilisateur ; et **en ce que** (c) comprend (c1),
exploration (s4-s8) d'une gamme de fréquences (c2) à partir d'un point prédéterminé, pour chacun desdits utilisateurs prédéterminés, commencement (s4) par une liste de canaux utilisateur vide, si un canal est trouvé, pour lequel les données d'attribut de programme et les données d'attribut d'utilisateur pour ladite liste de canaux d'utilisateur satisfont à un critère prédéterminé, ajout dudit canal trouvé à ladite liste de canaux d'utilisateur
(C3) enregistrement pour chaque utilisateur de la liste de canaux d'utilisateur respectif comme liste de canaux d'utilisateur actuel dans la mémoire
répétition continue de (c1) à (c3)
dans lequel ladite mémoire (13d) comprend une mémoire non volatile et (b) comprend l'utilisation de l'ID d'utilisateur pour que l'utilisateur accède aux données d'attribut d'utilisateur depuis la mémoire non volatile
dans lequel lesdites données d'attribut de programme comprennent une plage d'âge, les données d'attribut d'utilisateur comprennent la date de naissance de l'utilisateur et ledit critère prédéterminé inclut que l'âge de l'utilisateur, déduit de la date de naissance, se situe dans ladite plage d'âge.

8. Procédé selon la revendication 7, dans lequel (c) comprend l'exploration (s22-s30) d'une ou plusieurs parties mais pas de la gamme de fréquences entière, dans lequel la ou chaque partie contient un ou plusieurs canaux (i) trouvés lors d'une exploration antérieure de toute ou une partie de la gamme de fréquences ou (ii) correspondant à une sélection d'utilisateur.

9. Procédé selon la revendication 8, comprenant l'utilisation du circuit de traitement (13c, 13f, 13g) pour déduire l'âge de l'utilisateur en soustrayant la date de naissance de l'utilisateur à la date actuelle ; la date actuelle étant obtenue à partir des données de télétexte au sein du signal de télévision ou d'une horloge du système interne du récepteur de télévision.

10. Procédé selon l'une quelconque des revendications 7 à 9, dans lequel :
lesdites données d'attribut de programme comprennent un attribut de contenu, l'attribut de contenu indiquant que le programme actuellement transmis présente un accès restreint,
les données d'attribut d'utilisateur comprennent un attribut d'accessibilité de l'utilisateur et ledit critère prédéterminé comprend que l'attribut d'accessibilité de l'utilisateur indique que l'utilisateur est autorisé à visualiser des programmes à accès restreint.

11. Procédé selon l'une quelconque des revendications 7 à 10, comprenant en outre un dispositif d'affichage (16), dans lequel le circuit de traitement (13c, 13f, 13g) peut en outre être utilisé pour (e) afficher la liste de canaux d'utilisateur actuel.

12. Procédé selon l'une quelconque des revendications 7 à 10, réalisé dans un boîtier décodeur, dans lequel le circuit de traitement (13c, 13f, 13g) peut en outre être utilisé pour (e') sortir des signaux A/V définissant la liste de canaux d'utilisateur actuel sur une sortie A/V.

13. Récepteur de télévision programmable (13) lorsqu'il est programmé de manière adaptée pour réaliser au moins les étapes selon l'une quelconque des revendications 7 à 10.

14. Support enregistrable, réinscriptible ou mémorisable présentant des données enregistrées ou mémorisées dessus définissant ou transformables en instructions pour l'exécution par le circuit de traitement et correspondant au moins aux étapes selon l'une quelconque des revendications 7 à 10.

15. Ordinateur serveur incorporant un dispositif de communication et un dispositif de mémoire et étant adapté pour la transmission sur demande ou autre de données définissant ou transformables en instructions pour l'exécution par le circuit de traitement et correspondant au moins aux étapes selon l'une quelconque des revendications 7 à 10.
